# EUROPÄISCHE PATENTSCHRIFT

(11) **EP 3 186 495 B1**
(45) Veröffentlichungstag und Bekanntmachung des Hinweises auf die Patenterteilung: **09.10.2019**
(21) Anmeldenummer: 15750683.3
(22) Anmeldetag: 06.08.2015
(51) Int. Cl.: F01N 3/20, F01N 13/18

(54) **TANK FÜR EINE BETRIEBSFLÜSSIGKEIT FÜR EIN KRAFTFAHRZEUG**
TANK FOR AN OPERATING LIQUID FOR A MOTOR VEHICLE
RÉSERVOIR POUR UN LIQUIDE OPÉRATIONNEL D'UN VÉHICULE AUTOMOBILE

(30) Priorität: 26.08.2014 DE 102014112227
(43) Veröffentlichungstag der Anmeldung: 05.07.2017
(73) Patentinhaber: Continental Automotive GmbH, 30165 Hannover (DE)
(72) Erfinder: BRÜCK, Rolf, 51429 Bergisch Gladbach (DE)
(86) Internationale Anmeldenummer: PCT/EP2015/068142
(87) Internationale Veröffentlichungsnummer: WO 2016/030164

(56) Entgegenhaltungen:
- DE-A1-102010 014 314
- DE-A1-102011 014 634
- DE-A1-102011 118 652
- US-A1- 2012 311 999

## Beschreibung

Die Erfindung betrifft einen Tank für eine Betriebsflüssigkeit für ein Kraftfahrzeug. Dieser Tank ist insbesondere dazu geeignet, ein flüssiges Additiv zur Abgasreinigung in einem Kraftfahrzeug zu bevorraten.

Abgasbehandlungsvorrichtungen zur Reinigung der Abgase von Verbrennungskraftmaschinen in Kraftfahrzeugen, in welchen ein flüssiges Additiv zur Abgasreinigung verwendet wird, sind weit verbreitet. In solchen Abgasbehandlungsvorrichtungen wird beispielsweise das Abgasreinigungsverfahren der selektiven katalytischen Reduktion [SCR-Verfahren, SCR = Selective Catalytic Reduction] durchgeführt. Bei diesem Verfahren werden Stickstoffoxidverbindungen im Abgas einer Verbrennungskraftmaschine unter Zuhilfenahme von Ammoniak reduziert.

Ammoniak wird in Kraftfahrzeugen normalerweise nicht direkt bevorratet, sondern in Form einer flüssigen Ammoniakvorläuferläuferlösung. Besonders häufig wird als Ammoniakvorläuferlösung Harnstoff-Wasser-Lösung verwendet. Harnstoff-Wasser-Lösung ist mit einem Harnstoffgehalt von 32,5 Prozent unter dem Handelsnamen AdBlue® als Betriebsflüssigkeit für die Abgasreinigung in Kraftfahrzeugen erhältlich. Harnstoff-Wasser-Lösung kann abgasintern (innerhalb der Abgasbehandlungsvorrichtung) oder abgasextern (in einem dafür vorgesehenen separaten Reaktor außerhalb der Abgasbehandlungsvorrichtung) zu Ammoniak umgesetzt werden.

Problematisch bei der Bereitstellung von Betriebsflüssigkeit für die Abgasreinigung in einem Kraftfahrzeug ist insbesondere, dass diese beschriebenen Betriebsflüssigkeiten (insbesondere die beschriebene Harnstoff-Wasser-Lösung) bei niedrigen Temperaturen einfrieren können. Die Harnstoff-Wasser-Lösung mit dem Harnstoffwassergehalt von 32, 5 Prozent friert beispielsweise bei -11 °C ein. Tanks zur Bevorratung dieser Betriebsflüssigkeit müssen daher so konstruiert sein, dass sie auftretendem Eisdruck beim Einfrieren standhalten können. Darüber hinaus ist es regelmäßig erforderlich, Heizungen vorzusehen, mit welchen die Betriebsflüssigkeit aufgeschmolzen werden kann, wenn die Betriebsflüssigkeit eingefroren ist. Außerdem ist es erforderlich, dass Tanks und Fördervorrichtungen zur Förderung dieses flüssigen Additivs gegenüber Harnstoff-Wasser-Lösung beständig sind.

In den Dokumenten US 2012/0311999 A1, DE 10 2011 014 634 A1 und DE 10 2010 014 314 A1 wird ein Tank für eine Betriebsflüssigkeit eines Kraftfahrzeugs gezeigt mit einer Tankwand, einem in eine Öffnung in der Tankwand eingesetzten Einsatz sowie einem flexiblen Dichtelement zur flüssigkeitsdichten Verbindung der Tankwand mit dem Einsatz. Die flüssigkeitsdichte Verbindung kann thermisch bedingte Unterschiede der Materialausdehnungen in Tank und Einsatz ausgleichen.

Ausgehend von diesem Stand der Technik ist es Aufgabe der hier vorliegenden Erfindung, einen besonders vorteilhaften Tank für eine Betriebsflüssigkeit für ein Kraftfahrzeug zu beschreiben. Dieser Tank ist insbesondere zur Bevorratung von Harnstoff-Wasser-Lösung als Betriebsflüssigkeit geeignet. In dem Tank können aber auch andere Flüssigkeiten bevorratet werden.

Diese Aufgabe wird gelöst mit einem Tank gemäß den Merkmalen des Patentanspruchs 1. Weitere vorteilhafte Ausgestaltungen des Tanks sind in den abhängig formulierten Patentansprüchen angegeben. Es ist darauf hinzuweisen, dass die in den einzelnen Patentansprüchen erläuterten Merkmale in beliebiger, technologisch sinnvoller Weise miteinander kombinierbar sind und durch erläuternde Sachverhalte aus der Beschreibung ergänzt werden können, wobei weitere Ausführungsvarianten des Tanks aufgezeigt werden.

Beschrieben werden soll ein Tank für eine Betriebsflüssigkeit für ein Kraftfahrzeug mit einer Tankwand aus Kunststoff, aufweisend eine Öffnung und einen an der Öffnung angeordneten Einsatz aus Metall sowie ein flexibles Dichtelement zur flüssigkeitsdichten Verbindung der Tankwand und des Einsatzes miteinander, wobei aufgrund von thermischen Ausdehnungen der Tankwand und des Einsatzes (zumindest abschnittsweise) relative Verschiebungen zwischen der Tankwand und dem Einsatz auftreten und das flexible Dichtelement so gestaltet ist, dass an dem Einsatz und an der Tankwand jeweils Dichtflächen gebildet sind, an welchen das Dichtelement unabhängig von den relativen Verschiebungen anliegt.

Der Tank mit der Tankwand ist vorzugsweise mit einem Spritzgussverfahren aus Kunststoff gefertigt. Der Tank kann eine sehr komplexe Tankgeometrie haben, welche an den Bauraum angepasst ist, der in einem Kraftfahrzeug für den Tank zur Verfügung steht.

Der Einsatz aus Metall in dem Tank kann beispielsweise ein Topf sein, über welchen Flüssigkeit aus dem Tank entnommen werden kann. Der Einsatz kann auch eine Heizung aufweisen, mit welcher Flüssigkeit in dem Tank aufgeheizt werden kann. Der Einsatz kann auch ein Schwalltopf sein, der den Tank zumindest bereichsweise unterteilt und durch den Schwappbewegungen der Betriebsflüssigkeit in dem Tank reduziert werden.

Der Einsatz aus Metall und die Tankwand aus Kunststoff haben üblicherweise thermische Ausdehnungskoeffizienten, die sehr unterschiedlich sind. Mit einem thermischen Ausdehnungskoeffizienten ist hier ein Parameter gemeint, welcher die thermische Ausdehnung infolge von Temperaturerhöhungen beschreibt. Der Wärmeausdehnungskoeffizient hat üblicherweise die Einheit µm/mK. Bei einem Wärmeausdehnungskoeffizienten von 20 µm/mK bedeutet dies beispielsweise, dass ein Bauteil, welches bei einer Referenztemperatur eine Länge von 1 m hat, sich auf eine Länge von 1, 002 mm ausdehnt, wenn die Temperatur um 100° K oberhalb der Referenztemperatur liegt. Das Bauteil verkürzt sich auf eine Länge von 0,998 m, wenn die Temperatur um 100° K unterhalb der Referenztemperatur liegt. Die tatsächlichen Ausdehnungsverhalten eines Bauteils sind häufig nicht linear. Die Angaben für Wärmeausdehnungskoeffizient sind daher regelmäßig lineare Näherungswerte für das Ausdehnungsverhalten eines Werkstücks in unmittelbarer Umgebung zu einer Referenztemperatur.

Aufgrund der Tatsache, dass die Tankwand und der Einsatz aus unterschiedlichen Materialien bestehen (Kunststoff bzw. Metall), sind die thermischen Ausdehnungen von dem Einsatz und von der Tankwand üblicherweise unterschiedlich. Daher kann es zu den hier beschriebenen relativen Verschiebungen zwischen der Tankwand und dem Einsatz kommen, wenn Temperaturschwankungen auftreten.

Beim Auftreten von relativen Verschiebungen kann sich ein geometrischer Schwerpunkteinsatz relativ zu einem geometrischen Schwerpunkt des Tanks bzw. der Tankwand vollständig verlagern. Es ist aber auch möglich, dass die geometrischen Schwerpunkte von dem Einsatz und von der Tankwand unabhängig von thermischen Ausdehnungen relativ zueinander feststehen und thermische Verschiebungen nur abschnittsweise auftreten, so dass sich jeweils nur Abschnitte der Tankwand und der Tankwand relativ zueinander verschieben.

Mit Dichtflächen an der Tankwand bzw. an dem Einsatz sind hier Flächen gemeint, die unabhängig von der tatsächlich an der Tankwand bzw. an dem Einsatz vorliegenden Temperatur immer in Kontakt mit dem Dichtelement sind. Von Dichtflächen löst sich das Dichtelement durch relative Verschiebungen also nicht. In einer Ausführungsvariante ist das Dichtelement an den Dichtflächen dauerhaft befestigt, so dass keine relativen Verschiebungen oder nur begrenzte relative Verschiebungen auftreten können. In weiteren Ausführungsvarianten liegt das Dichtelement an den Dichtflächen an und es können an den Dichtflächen relative Bewegungen zwischen dem Dichtelement und dem Einsatz bzw. der Tankwand auftreten. Die Dichtflächen an dem Einsatz und an der Tankwand sind jedoch so (groß) ausgeführt sind, dass bei allen auftretenden Temperaturen die Dichtflächen jeweils durch das Dichtelement abgedeckt sind. "Auftretende Temperaturen" sind in diesem Zusammenhang minimale und maximale Temperaturen, denen ein Tank in einem Kraftfahrzeug üblicherweise ausgesetzt sein kann. Die Dichtflächen und das Dichtelement sind beispielsweise so ausgelegt, dass Dichtheit über einen Temperaturbereich zwischen -50 °C und +90 °C gewährleistet ist. Darüber hinaus ist es möglich, Dichtelemente an dem Einsatz bzw. an der Tankwand zu fixieren. Die Dichtflächen werden unabhängig von thermischen Ausdehnungen in dem angegebenen Temperaturbereich nicht von der Betriebsflüssigkeit benetzt. Das Dichtelement überstreicht bei den auftretenden thermischen Ausdehnungen benetzte Bereiche an der Tankwand und an dem Einsatz nie vollständig.

Die Öffnung, in welcher der Einsatz angeordnet ist, befindet sich besonders bevorzugt in einem unteren Bereich bzw. in einem Bodenbereich des Tanks. Besonders bevorzugt ist die Öffnung im Tankboden in der Tankwand bereitgestellt.

Besonders bevorzugt ist der Tank, wenn der Einsatz ein Gehäuse zur Aufnahme einer Fördereinheit für die Förderung von Betriebsflüssigkeit aus dem Tank ist.

Eine Fördereinheit umfasst vorzugsweise eine Pumpe zur Förderung der Betriebsflüssigkeit sowie gegebenenfalls weitere Komponenten, wie beispielsweise Sensoren, Ventile etc. Bevorzugt ist mit der Fördereinheit eine dosierte Bereitstellung von Betriebsflüssigkeit aus dem Tank möglich.

Eine Fördereinheit mit einem Gehäuse am Boden des Tanks zu positionieren, ermöglicht es, die Flüssigkeit aus dem Tank relativ unabhängig von der Füllhöhe der Flüssigkeit in dem Tank aus dem Tank entnehmen. Ein metallisches Gehäuse für eine Fördereinheit zur Förderung einer Flüssigkeit ist besonders stabil. Darüber hinaus ist ein solches metallisches Gehäuse insbesondere dazu geeignet, Wärme weiterzuleiten. Vorzugsweise ist in dem Einsatz bzw. in dem Gehäuse eine Heizung angeordnet. Von dieser Heizung produzierte Wärme wird durch den Einsatz bzw. durch das Gehäuse auf die Betriebsflüssigkeit in dem Tank übertragen.

Besonders bevorzugt ist der Tank, wenn die Öffnung einen Durchmesser von mehr als 100 mm [Millimeter] hat. Vorzugsweise hat die Öffnung einen Durchmesser von mehr als 120 mm und ganz besonders bevorzugt zwischen 130 mm und 200 mm.

Es hat sich herausgestellt, dass bei metallischen Einsätzen in einer Tankwand mit einem Durchmesser von mehr als 100 mm alternative Konzepte notwendig sind, um eine sichere fluiddichte Abdichtung zwischen der Tankwand und dem Einsatz zu gewährleisten. Insbesondere hat es sich herausgestellt, dass eine ausreichende Abdichtung mit klassischen Dichtungen (beispielsweise klassische O-Ring-Dichtungen) nicht möglich ist, weil klassische Dichtungen an den Dichtflächen an der Tankwand und an dem Einsatz abgleiten, wenn relative Verschiebungen auftreten. Bei Durchmessern des Einsatzes von mehr als 100 mm ist der Bereich, in dem die klassischen Dichtungen abgleiten, regelmäßig so groß, dass die Dichtflächen vollständig mit der Betriebsflüssigkeit benetzt werden. Dies führt regelmäßig zu einer Leckage an den Dichtflächen. Diese Leckage ist besonders groß, wenn der Tank regelmäßig Temperaturschwankungen ausgesetzt ist. Gleichzeitig sind insbesondere als Gehäuse für Fördereinheiten Einsätze mit einem Durchmesser von mehr als 100 mm regelmäßig erforderlich. Nur Einsätze bzw. Gehäuse dieser Größe bieten ausreichend Platz, so dass dort alle Komponenten einer Fördereinheit hierin untergebracht werden können.

Das beschriebene Dichtungskonzept lässt einerseits relative Verschiebungen gezielt zu und gewährleistet andererseits ein sicheres Anliegen bzw. eine sichere Abdeckung von Dichtflächen an der Tankwand bzw. an dem Einsatz . So kann es ermöglicht werden, dass einerseits derart große Durchmesser für Öffnungen in der Tankwand bzw. für metallische Einsätze und Gehäuse in einem Tank verwendet werden können und anderseits eine dauerhafte fluiddichte Abdichtung der Einsätzen bzw. der Gehäuse an der Tankwand gewährleistet ist.

In einem nicht erfindungsgemäßen Beispiel kann der Tank derart dargestellt werden, wenn das flexible Dichtelement ein Dichtring ist, welcher mit einer ersten Anlagefläche an der Tankwand und mit einer zweiten Anlagefläche an dem Einsatz anliegt, wobei die erste Anlagefläche und die zweite Anlagefläche größer sind als eine maximale relative Verschiebung zwischen der Tankwand und dem Einsatz, die aufgrund von thermischen Ausdehnungen auftritt.

Insbesondere wird hier ein Dichtring beschrieben, welcher keinen linearen Kontakt zwischen der Tankwand und der Dichtringfläche bzw. zwischen dem Einsatz und der Dichtringfläche gewährleistet, sondern einen flächigen Kontakt. Bei relativen Verschiebungen zwischen dem Einsatz und der Tankwand, zwischen dem Einsatz und dem Dichtring oder zwischen der Tankwand und dem Dichtring existiert dann temperaturunabhängig immer eine Restfläche, die von dem Dichtelement vollständig abgedeckt ist.

Besonders ist das Dichtelement ein Dichtring mit einer rechteckigen Querschnittsfläche. Ein solcher Dichtring hat im Verhältnis zu einem Dichtring mit runder Querschnittsfläche eine große Anlagefläche an dem Einsatz bzw. an der Tankwand.

In einigen nicht erfindungsgemäßen Beispielen sind Dichtringe so gestaltet, dass sie an der Tankwand bzw. an dem Einsatz abrollen, wenn die beschriebenen relativen Verschiebungen zwischen der Tankwand und dem Einsatz auftreten. Bei solchen Dichtringen ist vorzugsweise gewährleistet, dass ein maximaler Abrollwinkel der Dichtringe so klein gewählt ist, dass trotzdem die weiter oben beschriebenen Dichtflächen an dem Einsatz und an der Tankwand beibehalten werden, die unabhängig von den thermischen Verschiebungen immer vollständig von dem Dichtring bzw. dem Dichtelement abgedeckt sind.

In einem nicht erfindungsgemäßen Beispiel kann der Tank derart dargestellt werden, wenn das flexible Dichtelement bei thermischen Ausdehnungen an einer ersten Dichtfläche an der Tankwand und an einer zweiten Dichtfläche an dem Einsatz abrollt.

Abrollende Dichtungen sind besonders verschleißarm, weil durch relative Verschiebungen jeweils keine Reibung zwischen dem Dichtelement und dem Einsatz bzw. zwischen dem Dichtelement und der Tankwand auftritt.

In einem nicht erfindungsgemäßen Beispiel kann der Tank derart dargestellt werden, wenn das flexible Dichtelement ein Schlauchdichtring ist.

Ein Schlauchdichtring ist eine besondere Form eines Dichtrings, welche innen hohl ist. Ein Schlauchdichtring wird durch eine Druckkraft an den Dichtflächen platt gedrückt und ergibt so eine verhältnismäßig große Dichtfläche an dem Einsatz bzw. an der Tankwand. Schlauchdichtringe können so eingerichtet sein, dass diese bei relativen Verschiebungen zwischen der Tankwand und dem Einsatz an dem Einsatz bzw. an der Tankwand abrollen. Alternativ oder zusätzlich können Schlauchdichtringe so eingerichtet sein, dass diese durch derartige relative Verschiebungen verschoben werden und an der Tankwand bzw. an dem Einsatz abgleiten. Beide Varianten sind im Rahmen der hier beschriebenen Verbindung zwischen Tankwand und Einsatz erfasst.

Das erfindungsgemäße Dichtelement des Tanks ist eine Membran, wobei ein erster Abschnitt der Membran stoffschlüssig an der Tankwand angebunden ist und ein zweiter Abschnitt der Membran stoffschlüssig an den metallischen Tankeinsatz angebunden ist, wobei die Membran zwischen dem ersten Abschnitt und dem zweiten Abschnitt eine Flexibilitätszone aufweist, welche relative Verschiebungen aufgrund von thermischen Ausdehnungen zwischen der Tankwand und dem Einsatz kompensiert.

Ein derartiges als Membran ausgeführtes Dichtelement kann beispielsweise mit einer Schweißverbindung an der Tankwand bzw. an dem Einsatz angeschweißt sein. Es ist auch möglich, dass ein derartiges Dichtelement an der Tankwand bzw. an dem Einsatz angeklebt ist. Vorzugsweise ist das als Membran ausgeführte Dichtelement sowohl in der Flexibilitätszone als auch an dem ersten Abschnitt und an dem zweiten Abschnitt flexibel. An dem ersten Abschnitt und an dem zweiten Abschnitt ist diese Flexibilität insbesondere notwendig, um lokal begrenzte thermische Ausdehnungen kompensieren zu können. Das Material des Dichtelements bzw. der Membran muss an dem ersten Abschnitt und an dem zweiten Abschnitt in der Lage sein, sich lokal auf die an der Verbindungsstelle stattfindenden thermischen Ausdehnungen der Tankwand und des Einsatzes anzupassen. In der Flexibilitätszone ist die Flexibilität des Dichtelements notwendig, um einen Ausgleich der relativen Verschiebungen zu gewährleisten.

Vorzugsweise sind die Tankwand und der Einsatz nicht nur über das Dichtelement miteinander verbunden sondern es existiert zusätzlich ein separates Montagemittel zur Verbindung von Tankwand und Einsatz. Dieses separate Montagemittel gewährleistet dabei bevorzugt eine mechanische Fixierung des Einsatzes an der Tankwand, wobei relative Verschiebungen von dem separaten Montagemittel zugelassen werden. Das separate Montagemittel wird beispielsweise von einem Flansch und einem Deckel gebildet, die den Einsatz an der Öffnung in der Tankwand verspannen. Eine relative Verschiebung des Einsatzes senkrecht zur Tankwand wird durch ein solches separates Montagemittel verhindert, während eine relative Verschiebung des Einsatzes parallel zur Tankwand auftreten kann.

In einer weiteren bevorzugten Ausführungsvariante ist der Einsatz in einen Abschnitt der Tankwand eingesetzt, welcher ein Zwischenbauteil bildet. Dieses Zwischenbauteil ist mit der (weiteren) Tankwand über eine Schweißverbindung verbunden. Das Zwischenbauteil bildet eine Art Zwischenflansch, welcher zur sicheren fluiddichten Anbindung des metallischen Einsatzes an die Kunststofftankwand dient und welches damit die Montage des Einsatzes in der Tankwand ermöglicht.

Hier auch beschrieben werden soll ein Kraftfahrzeug, aufweisend eine Verbrennungskraftmaschine, eine Abgasbehandlungsvorrichtung mit einem SCR-Katalysator und einen vorstehend beschriebenen Tank zur Bevorratung und Bereitstellung von Betriebsflüssigkeit für die Abgasreinigung.

Die Erfindung sowie das technische Umfeld werden nachfolgend anhand der Figuren näher erläutert. Es ist darauf hinzuweisen, dass die Figuren nur schematisch sind und jeweils nur bevorzugte Ausführungsbeispiele der Erfindung zeigen. Insbesondere die in den Figuren dargestellten Größenverhältnisse sind nur schematisch zu verstehen. Es zeigen:
- Fig. 1:: eine nicht erfindungsgemäßes Beispiel eines Tanks,
- Fig. 2:: eine Ausführungsvariante eines beschriebenen Tanks,
- Fig. 3:: eine nicht erfindungsgemäßes Beispiel eines Tanks,
- Fig. 4:: eine Ausführungsvariante eines beschriebenen Tanks,
- Fig. 5:: ein schematisches Diagramm von auftretenden Verschiebungen an einem beschriebenen Tank, und
- Fig. 6:: ein Kraftfahrzeug mit einem beschriebenen Tank.

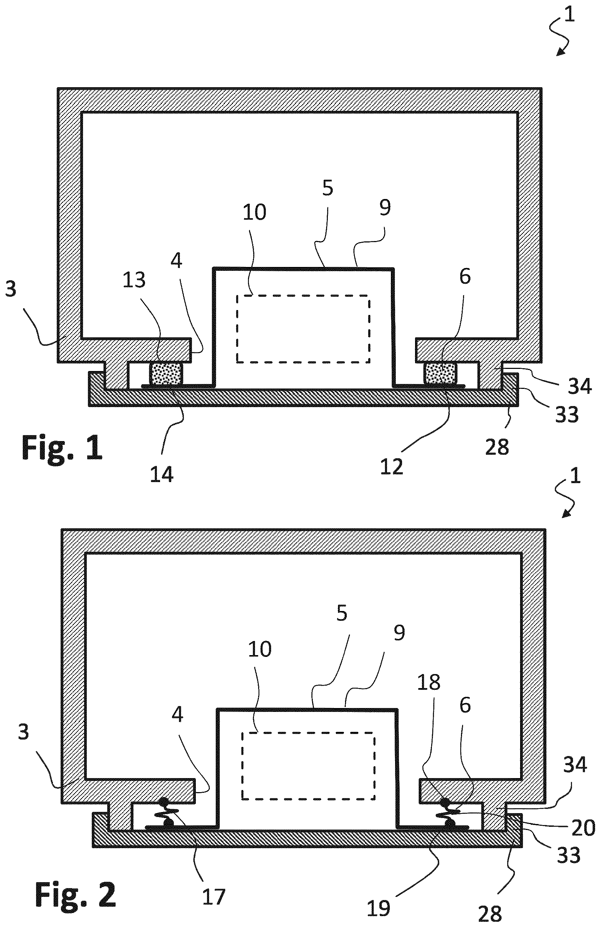

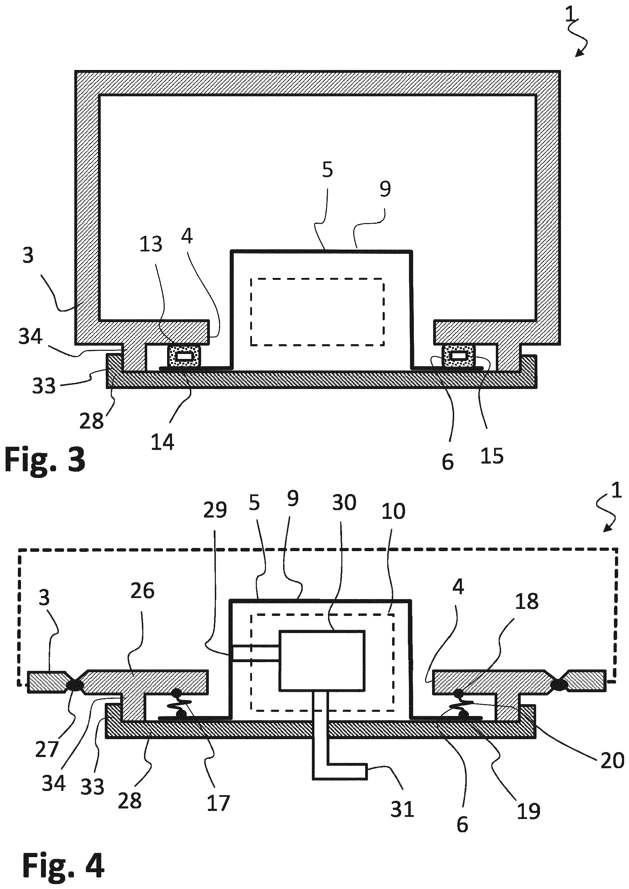

Die Fig. 1, 2, 3 und 4 zeigen jeweils vier verschiedene Beispiele eines Tanks 1 mit einer Tankwand 3. In der Tankwand 3 ist eine Öffnung 4 vorgesehen, in die ein Einsatz 5 eingesetzt ist, welcher mit einem Dichtelement 6 an dem Tank abgedichtet ist. In allen in den Fig. 1 - 4 dargestellten Beispielen ist der Einsatz 5 ein Gehäuse 9, welches zur Aufnahme einer Fördereinheit 10 zur Bereitstellung von flüssigem Additiv für die Abgasreinigung aus dem Tank zu einer Abgasbehandlungsvorrichtung geeignet ist. In der Fig. 4 ist die Fördereinheit beispielhaft etwas detaillierter dargestellt, wobei auch der in Fig. 4 erläuterte Aufbau einer Fördereinheit 10 stark vereinfacht ist. Die Fördereinheit 10 hat eine Pumpe 30 und entnimmt Betriebsflüssigkeit aus dem Tank 1 an einer Ansaugstelle 29 und stellt diese Betriebsflüssigkeit an dem Bereitstellungsanschluss 31 bereit. Der Bereitstellungsanschluss 31 dient beispielsweise dem Anschluss einer hier nicht näher dargestellten Leitung, die zu einem Injektor zur Abgabe der Betriebsflüssigkeit an einer Abgasbehandlungsvorrichtung führt.

Der Einsatz 5 ist bei den Beispielen in den Fig. 1 bis 3 jeweils mit einem separaten Montagemittel 33 an der Tankwand 3 befestigt. Das separate Montagemittel 33 umfasst einen Flansch 34 an der Tankwand 3 und einen Deckel 28, der auf den Flansch 34 aufgesetzt ist (bspw. aufgeschraubt oder aufgesteckt). Der Einsatz 5 ist zwischen dem Deckel 28 und der Tankwand 3 verspannt. So sind einerseits Verschiebungen des Einsatzes 5 senkrecht zu der Tankwand 3 verhindert. Anderseits ermöglicht das Montagemittel 33 aus Flansch 34 und Deckel 28 relative Verschiebungen zwischen Einsatz 5 und Tankwand 3 parallel zur Tankwand 3.

Gemäß dem Beispiel in Fig. 1 ist das Dichtelement 6 ein Dichtring 12. Der Dichtring liegt an dem Einsatz mit einer zweiten Anlagefläche 14 und an der Tankwand 3 mit einer ersten Anlagefläche 13 an und dichtet so die Tankwand 3 und den Einsatz 5 gegeneinander ab.

Gemäß der Ausführungsvariante in Fig. 2 ist das Dichtelement 6 eine Membran 17, die einen ersten Abschnitt 18 aufweist, welcher an der Tankwand 3 befestigt ist, und einen zweiten Abschnitt 19, welcher an dem Einsatz 5 befestigt ist, wobei zwischen dem ersten Abschnitt 18 und dem zweiten Abschnitt 19 eine Flexibilitätszone 20 angeordnet ist, welche relative Verschiebungen zwischen dem Einsatz 5 und der Tankwand 3 ermöglicht.

Gemäß Fig. 3 ist ein Beispiel des Dichtelements 6 gezeigt, welche ein Schlauchdichtring 15 ist. Ein Schlauchdichtring 15 ist in besonderer Weise dazu geeignet, ein abrollendes Dichtelement 6 zu bilden, weil in einem Schlauchdichtring 15 beim Abrollen weniger innere Scherkräfte auftreten, die den Schlauchdichtring 15 beeinträchtigen.

In Fig. 4 ist der Tank 1 lediglich schematisch dargestellt. Der Einsatz 5 ist hier in einen Abschnitt der Tankwand 3 eingesetzt, welcher ein Zwischenbauteil 26 bildet. Dieses Zwischenbauteil ist mit der weiteren Tankwand 3 über eine Schweißverbindung 27 verbunden. Das Zwischenbauteil 26 bildet eine Art Zwischenflansch, welcher zur sicheren fluiddichten Anbindung des metallische Einsatzes 5 an die Kunststofftankwand dient, und welches damit die Montage des Einsatzes 5 in der Tankwand 3 ermöglicht. Als Dichtkonzept für den Einsatz 5 in der Tankwand 3 ist gemäß Fig. 4 das Konzept gemäß Fig. 2 verwirklicht. Das Zwischenbauteil 26 kann aber auch mit den anderen hier beschriebenen nicht erfindungsgemäßen Dichtkonzepten (gemäß Fig. 1 oder Fig. 3) kombiniert werden.

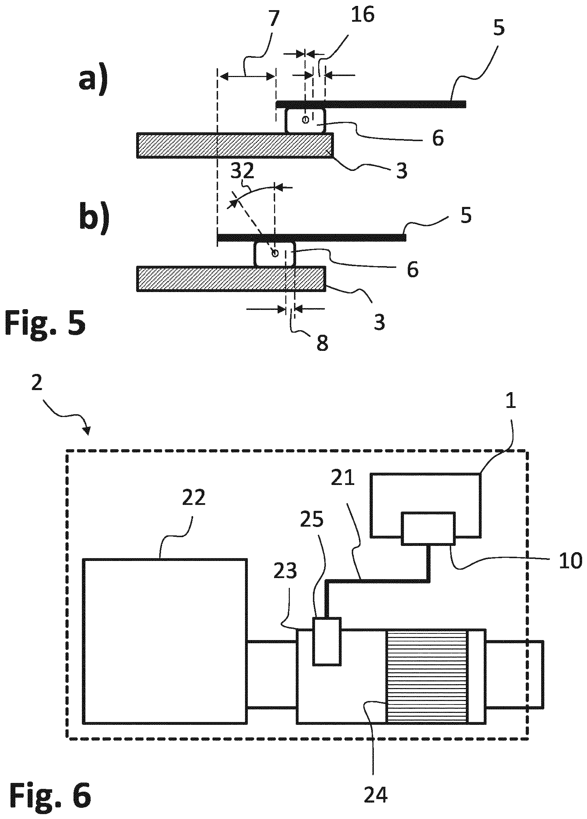

In Fig. 5 sind die relativen Verschiebungen 7 beschrieben, welche durch thermische Ausdehnungen der Tankwand 3 und des Einsatzes 5 auftreten können. Figurteil a) zeigt eine Situation, in der der Einsatz 5 und die Tankwand 3 besonders weit auseinander gezogen sind. Figurteil b) zeigt einen Situation gemäß welcher der Einsatz 5 und die Tankwand 3 besonders dicht beieinander liegen. Beispielsweise liegt die Situation gemäß Figurteil b) bei besonders geringen (minimalen) Temperaturen vor während die Situation gemäß Figurteil a) bei besonders hohen (maximalen) Temperaturen vorliegt. Die Zuordnung minimaler Temperaturen und maximaler Temperaturen zu den Figurteilen a) und b) ist hier jedoch nur beispielhaft. Tatsächlich kann (je nach Tankgeometrie und Wärmeausdehnungskoeffizienten von Tankwand und Einsatz) hier auch die genau umgekehrte Situation vorliegen so dass Figurteil b) maximalen Temperaturen und Figurteil a) minimalen Temperaturen entspricht. Zu erkennen sind jeweils eine erste Dichtfläche 8 zwischen dem Dichtelement 6 und der Tankwand 3 sowie eine zweite Dichtfläche 16 zwischen dem Einsatz und dem Dichtelement 6, die jeweils unabhängig von der Position des Einsatzes 5 und der Tankwand 3 zueinander von dem Dichtelement 6 abgedeckt sind. Es ist zu berücksichtigen, dass A beispielsweise einen Pfeil zeigt, in welchem die maximal für den Tank zulässigen möglichen Temperaturen vorliegen, während Pfeil B eine Situation zeigt, wo die minimalen für den Tank möglichen Temperaturen vorliegen. In Fig. 5 auch angedeutet ist ein maximaler Abrollwinkel 32, den das Dichtelement 6 an der Tankwand 3 und an dem Einsatz 5 abrollt.

Fig. 6 zeigt ein Kraftfahrzeug 2, aufweisend eine Verbrennungskraftmaschine 22 und eine Abgasbehandlungsvorrichtung 23, in welcher sich ein SCR-Katalysator 24 zur Reinigung der Abgase der Verbrennungskraftmaschine 22 befindet. Der SCR-Katalysator 24 wird von einem Injektor 25 mit flüssigem Additiv zur Abgasreinigung versorgt, welches dem Injektor 25 von einer Fördereinheit 10 über eine Leitung 21 aus einem Tank 1 bereitgestellt wird.

### Bezugszeichenliste

- 1: Tank
- 2: Kraftfahrzeug
- 3: Tankwand
- 4: Öffnung
- 5: Einsatz
- 6: Dichtelement
- 7: Verschiebung
- 8: erste Dichtfläche
- 9: Gehäuse
- 10: Fördereinheit
- 11: Durchmesser
- 12: Dichtring
- 13: erste Anlagefläche
- 14: zweite Anlagefläche
- 15: Schlauchdichtring
- 16: zweite Dichtfläche
- 17: Membran
- 18: erster Abschnitt
- 19: zweiter Abschnitt
- 20: Flexibilitätszone
- 21: Leitung
- 22: Verbrennungskraftmaschine
- 23: Abgasbehandlungsvorrichtung
- 24: SCR-Katalysator
- 25: Injektor
- 26: Zwischenbauteil
- 27: Schweißverbindung
- 28: Deckel
- 29: Ansaugstelle
- 30: Pumpe
- 31: Bereitstellungsanschluss
- 32: Abrollwinkel
- 33: Montagemittel
- 34: Flansch

## Patentansprüche

1. Tank (1) für eine Betriebsflüssigkeit eines Kraftfahrzeugs (2) mit einer Tankwand (3) aus Kunststoff, aufweisend eine Öffnung (4) und einem an der Öffnung (4) angeordneten Einsatz (5) aus Metall sowie ein flexibles Dichtelement (6) zur flüssigkeitsdichten Verbindung der Tankwand (3) und des Einsatzes (5) miteinander, wobei das flexible Dichtelement (6) eine Membran (17) ist, wobei ein erster Abschnitt (18) der Membran (17) stoffschlüssig an der Tankwand (3) angebunden ist, und ein zweiter Abschnitt (19) der Membran (17) stoffschlüssig an den metallischen Einsatz (5) angebunden ist, wobei die Membran (17) zwischen dem ersten Abschnitt (18) und dem zweiten Abschnitt (19) eine Flexibilitätszone (20) aufweist, wobei die Flexibilitätszone nicht mit der Tankwand (3) und dem Einsatz (5) in Kontakt steht, und welche relative Verschiebungen (7) aufgrund von thermischen Ausdehnungen zwischen der Tankwand (3) und dem Einsatz (5) kompensiert. wobei aufgrund von thermischen Ausdehnungen der Tankwand (3) und des Einsatzes (5) zumindest abschnittsweise relative Verschiebungen (7) zwischen der Tankwand (3) und dem Einsatz (5) auftreten und das flexible Dichtelement (6) so gestaltet ist, dass an dem Einsatz (5) und an der Tankwand (3) jeweils Dichtflächen (8, 16) gebildet sind, an welchen das Dichtelement (6) unabhängig von den relativen Verschiebungen (7) anliegt.

2. Tank (1) nach Patentanspruch 1, wobei der Einsatz (5) ein Gehäuse (9) zur Aufnahme einer Fördereinheit (10) für die Förderung von Betriebsflüssigkeit aus dem Tank (1) ist.

3. Tank (1) nach einem der vorhergehenden Patentansprüche, wobei die Öffnung (4) einen Durchmesser (11) von mehr als 100 mm [Millimeter] hat.

4. Kraftfahrzeug (2), aufweisend eine Verbrennungskraftmaschine (22), eine Abgasbehandlungsvorrichtung (23) mit einem SCR-Katalysator (24) und einen Tank (1) nach einem der vorgehenden Patentansprüche zur Speicherung und Bereitstellung von flüssigem Additiv für die Abgasreinigung.

## Claims

1. Tank (1) for an operating liquid of a motor vehicle (2), with a tank wall (3) composed of plastic, having an opening (4), and with an insert (5) composed of metal arranged at the opening (4), and a flexible sealing element (6) for the liquid-tight connection of the tank wall (3) and of the insert (5) to one another, wherein the flexible sealing element (6) is a diaphragm (17), wherein a first section (18) of the diaphragm (17) is connected cohesively to the tank wall (3), and a second section (19) of the diaphragm (17) is connected cohesively to the metallic insert (5), wherein the diaphragm (17) has, between the first section (18) and the second section (19), a flexibility zone (20), wherein the flexibility zone is not in contact with the tank wall (3) and the insert (5), and which compensates relative displacements (7) owing to thermal expansions between the tank wall (3) and the insert (5), wherein relative displacements (7) between the tank wall (3) and the insert (5) occur at least in sections owing to thermal expansions of the tank wall (3) and of the insert (5), and the flexible sealing element (6) is designed such that, on the insert (5) and on the tank wall (3), respective sealing surfaces (8, 16) are formed against which the sealing element (6) bears independently of the relative displacements (7).

2. Tank (1) according to Patent Claim 1, wherein the insert (5) is a housing (9) for accommodating a delivery unit (10) for the delivery of operating liquid out of the tank (1).

3. Tank (1) according to one of the preceding patent claims, wherein the opening (4) has a diameter (11) of greater than 100 mm [millimeters].

4. Motor vehicle (2) having an internal combustion engine (22), having an exhaust-gas treatment device (23) with an SCR catalytic converter (24) and having a tank according to one of the preceding patent claims for storing and supplying liquid additive for the exhaust-gas purification.

## Revendications

1. Réservoir (1) pour un liquide opérationnel d'un véhicule automobile (2), comprenant une paroi de réservoir (3) en plastique, présentant une ouverture (4) et un insert (5) en métal disposé au niveau de l'ouverture (4) ainsi qu'un élément d'étanchéité flexible (6) pour la liaison étanche aux liquides de la paroi de réservoir (3) et de l'insert (5) l'un à l'autre, l'élément d'étanchéité flexible (6) étant une membrane (17), une première portion (18) de la membrane (17) étant reliée par liaison de matière à la paroi de réservoir (3), et une deuxième portion (19) de la membrane (17) étant reliée par liaison de matière à l'insert métallique (5), la membrane (17) présentant entre la première portion (18) et la deuxième portion (19) une zone de flexibilité (20), la zone de flexibilité n'étant pas en contact avec la paroi de réservoir (3) et l'insert (5), et laquelle compense des mouvements relatifs (7) provoqués par des dilatations thermiques entre la paroi de réservoir (3) et l'insert (5), des mouvements relatifs (7) au moins partiels entre la paroi de réservoir (3) et l'insert (5) se produisant sous l'effet de dilatations thermiques de la paroi de réservoir (3) et de l'insert (5) et l'élément d'étanchéité flexible (6) étant configuré de telle sorte que des surfaces d'étanchéité (8, 16) soient formées respectivement sur l'insert (5) et sur la paroi de réservoir (3), au niveau desquelles surfaces d'étanchéité s'applique l'élément d'étanchéité (6) indépendamment des mouvements relatifs (7).

2. Réservoir (1) selon la revendication 1, dans lequel l'insert (5) est un boîtier (9) destiné à recevoir une unité de refoulement (10) pour refouler du liquide opérationnel hors du réservoir (1).

3. Réservoir (1) selon l'une quelconque des revendications précédentes, dans lequel l'ouverture (4) présente un diamètre (11) supérieur à 100 mm [millimètres].

4. Véhicule automobile (2) présentant un moteur à combustion interne (22), un dispositif de traitement de gaz d'échappement (23) avec un catalyseur à RCS (24) et un réservoir (1) selon l'une quelconque des revendications précédentes pour le stockage et la fourniture d'additif fluide pour la purification des gaz d'échappement.
